(19) Europäisches Patentamt / European Patent Office / Office européen des brevets

(11) **EP 4 458 868 A1**

(12) **EUROPEAN PATENT APPLICATION**
published in accordance with Art. 153(4) EPC

(43) Date of publication:
**06.11.2024 Bulletin 2024/45**

(21) Application number: **22915848.0**

(22) Date of filing: **21.12.2022**

(51) International Patent Classification (IPC):
*C08F 2/44* (2006.01)          *B01J 13/14* (2006.01)
*C08F 2/18* (2006.01)

(52) Cooperative Patent Classification (CPC):
**B01J 13/14; C08F 2/18; C08F 2/44**

(86) International application number:
**PCT/JP2022/047033**

(87) International publication number:
**WO 2023/127624 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2021   JP 2021214996**

(71) Applicant: **Zeon Corporation
Tokyo 100-8246 (JP)**

(72) Inventor: **WATANABE, Masashi
Tokyo 100-8246 (JP)**

(74) Representative: **Kraus & Lederer PartGmbB
Thomas-Wimmer-Ring 15
80539 München (DE)**

(54)    **HOLLOW PARTICLE**

(57)    To provide hollow particles excellent in pressure resistance. Hollow particles which comprise a shell containing a resin and a hollow portion surrounded by the shell, wherein a void ratio is 50% or more, and wherein a residual void ratio measured by a specific press test method is 80% or more.

**Description**

Technical Field

The disclosure relates to hollow particles.

Background

Hollow particles (hollow resin particles) have a hollow in their interior. Accordingly, they are added and used in resins, coating materials, various kinds of molded bodies and so on, for the purpose of weight reduction, heat insulation, a decrease in permittivity, etc. Their application covers a wide range of fields, such as automobiles, bicycles, aviation, electric, electronics, architecture, household appliances, containers, stationery products, tools and footwear.
To enhance the effects of various kinds of compositions and molded bodies containing hollow particles, such as weight reduction, heat insulation and a decrease in permittivity, it is desirable that hollow particles can retain a high void ratio even when they are mixed and kneaded with other materials and even when the mixture is molded after the mixing and kneading.
For example, as a method for obtaining hollow particles which have a high void ratio and which hardly collapse, Patent Document 1 discloses a suspension polymerization method that uses a polymerizable monomer and a hydrocarbon solvent as a hydrophobic solvent which is included in the particles during the production process, wherein, with respect to the total mass (100 parts by mass) of the polymerizable monomer, the total content of a crosslinkable monomer is from 80 parts by mass to 98 parts by mass, and the content of a tri- or higher functional crosslinkable monomer is from 10 parts by mass to 98 parts by mass, and wherein the hydrocarbon solvent contains 50% by mass or more of a saturated hydrocarbon solvent.
As hollow particles which have a high void ratio and which hardly collapse, Patent Document 2 discloses hollow particles wherein the shell has a thickness of 0.2 um or more and 0.9 um or less, and wherein a polymer derived from a polymerizable monomer for shell, which is composed of 70% by mass or more and 100% by mass or less of a crosslinkable monomer and 0% by mass or more and 30% by mass or less of a non-crosslinkable monomer, and a polar resin selected from the group consisting of polymers containing a repeating unit which contains a heteroatom, are contained.

Citation List

[Patent Documents]

>   Patent Document 1: International Publication No. WO2020/261926
>   Patent Document 2: International Publication No. WO2021/112110

Summary of Invention

Technical Problem

However, when external pressure is increased in a process in which external pressure is applied, such as injection molding, conventional hollow particles may fail to sufficiently retain the void in the interior of the particles, and there is a demand for further improvement in the pressure resistance of hollow particles.
An object of the present disclosure is to provide hollow particles excellent in pressure resistance.

Solution to Problem

In a press test for evaluation of the pressure resistance of hollow particles, conventional method have large variation in test results and have difficulty in evaluating differences in pressure resistance with high accuracy. As a result of trial and error, the present inventor achieved a highly accurate press test method with small variation in test results; moreover, the inventor found that the void retention ratio measured by the press test method can be used as an indication of the void retention ratio of the hollow particles after a process in which external pressure is applied, such as injection molding. Also, the present inventor succeeded in achieving hollow particles with better pressure resistance than ever before, by controlling the composition of the polymerizable monomer used for the formation of the hollow particles, the type of the hydrophobic solvent to be included in the particles during the production process, the particle diameter of the hollow particles, or the like. The present inventor found that the thus-achieved hollow particles can be differentiated from conventional hollow particles by the value of the residual void ratio measured by the newly achieved, highly accurate press test method.

The present disclosure provides hollow particles which comprise a shell containing a resin and a hollow portion surrounded by the shell,

wherein a void ratio is 50% or more, and
wherein a residual void ratio measured by the following press test method is 80% or more:
[press test method]
a mixture obtained by melting and mixing 0.1 g of the hollow particles and 0.9 g of a polypropylene resin at 200°C, is poured into a mold for a hot press machine, heated at 200°C for 15 minutes, and then stirred; the mold filled with the mixture is installed in the hot press machine set to 80°C; a cylinder at 80°C is put in the mold and left to stand; the mixture is pressed at 60 MPa when a surface temperature of the mold reaches 140°C, thereby obtaining a molded body of the mixture; the molded body is removed from the mold and pressed at a pressure of 1 MPa or less, thereby forming the molded body into a sheet shape; and the residual void ratio of the hollow particles contained in the obtained sheet-shaped molded body is measured.

In the hollow particles of the present disclosure, the shell preferably contains, as the resin, a polymer containing 50 parts by mass or more of crosslinkable monomer units in 100 parts by mass of all monomer units.

In the hollow particles of the present disclosure, the polymer preferably contains, as the crosslinkable monomer units, trifunctional or higher-functional crosslinkable monomer units derived from a trifunctional or higher-functional crosslinkable monomer, and in 100 parts by mass of all monomer units of the polymer, a content of the trifunctional or higher-functional crosslinkable monomer units is preferably 10 parts by mass or more and 50 parts by mass or less.

In the hollow particles of the present disclosure, the polymer preferably contains, as the crosslinkable monomer units, difunctional crosslinkable monomer units derived from a difunctional crosslinkable monomer and trifunctional or higher-functional crosslinkable monomer units derived from a trifunctional or higher-functional crosslinkable monomer.

In the hollow particles of the present disclosure, in a total 100 parts by mass of the difunctional crosslinkable monomer units and the trifunctional or higher-functional crosslinkable monomer units, a content of the trifunctional or higher-functional crosslinkable monomer units is preferably 5 parts by mass or more and 40 parts by mass or less.

In the hollow particles of the present disclosure, the shell preferably contains, as the resin, a polymer containing acrylic monomer units and hydrocarbon monomer units, and in a total 100 parts by mass of the acrylic monomer units and the hydrocarbon monomer units, a content of the hydrocarbon monomer units is preferably 10 parts by mass or more and 80 parts by mass or less.

In the hollow particles of the present disclosure, a volume average particle diameter is preferably 5.0 um or more and 40.0 um or less.

Advantageous Effects of Invention

The present disclosure as described above provides hollow particles configured that the void ratio is less likely to decrease even after they are subjected to a process in which external pressure is applied, such as injection molding.

Brief Description of Drawing

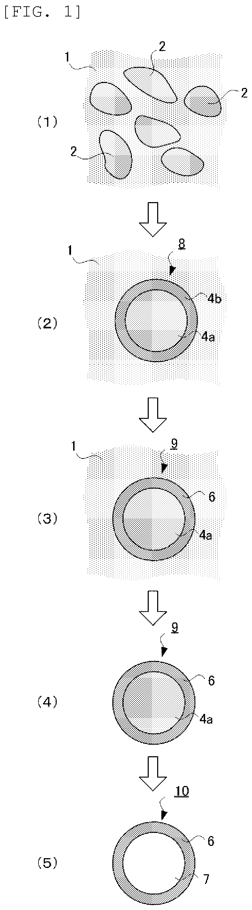

[FIG. 1] A diagram illustrating an example of the method for producing the hollow particles of the present disclosure.

Description of Embodiments

In the present disclosure, "to" which shows a numerical range is used to describe a range in which the numerical values described before and after "to" indicate the lower limit value and the upper limit value.

Also in the present disclosure, (meth)acrylate means each of acrylate and methacrylate; (meth)acryl means each of acryl and methacryl; and (meth)acryloyl means each of acryloyl and methacryloyl.

Also in the present disclosure, the term "polymerizable monomer" means a compound having an addition-polymerizable functional group (in the present disclosure, it may be simply referred to as a "polymerizable functional group"). Also in the present disclosure, as the polymerizable monomer, a compound having an ethylenically unsaturated bond as the addition-polymerizable functional group, is generally used.

In the present disclosure, a polymerizable monomer which has only one polymerizable functional group is referred to as a non-crosslinkable monomer, and a polymerizable monomer which has two or more polymerizable functional groups is referred to as a crosslinkable monomer. The crosslinkable monomer is a polymerizable monomer which forms crosslinking in resin by polymerization reaction.

The hollow particles of the present disclosure are hollow particles which comprise a shell containing a resin and a hollow portion surrounded by the shell, wherein a void ratio is 50% or more, and wherein a residual void ratio measured by the press test method described below is 80% or more.

The hollow particles of the present disclosure are particles which comprise a resin-containing shell (outer shell) and a hollow portion surrounded by the shell.

In the present disclosure, the term "hollow portion" means a hollow space clearly distinguished from the shell of hollow particles formed from a resin material. The shell of the hollow particles may have a porous structure. In this case, the hollow portion has a size that is clearly distinguishable from many minute spaces uniformly dispersed in the porous structure. From the viewpoint of pressure resistance and so on, the hollow particles of the present disclosure preferably have a solid shell.

The hollow portion of the hollow particles can be determined by, for example, SEM observation of a cross section of the particles or TEM observation of the particles as they are.

From the viewpoint of exerting excellent dielectric property, the hollow portion of the hollow particles of the present disclosure may be filled with gas such as air, may be in a vacuum or reduced pressure state, or may contain a solvent.

The press test method used in the present disclosure is as follows.

A mixture obtained by melting and mixing 0.1 g of the hollow particles and 0.9 g of a polypropylene resin at 200°C, is poured into a mold for a hot press machine, heated at 200°C for 15 minutes, and then stirred; the mold filled with the mixture is installed in the hot press machine set to 80°C; a cylinder at 80°C is put in the mold and left to stand; the mixture is pressed at 60 MPa when a surface temperature of the mold reaches 140°C, thereby obtaining a molded body of the mixture; the molded body is removed from the mold and pressed at a pressure of 1 MPa or less, thereby forming the molded body into a sheet shape; and the residual void ratio of the hollow particles contained in the obtained sheet-shaped molded body is measured.

The residual void ratio of the hollow particles contained in the molded body can be calculated by the following formula (A) .

$$\text{Residual void ratio (\%)} = \{(c-a)/(c-b)\} \times 100 \quad \text{Formula (A)}$$

In the formula (A), "a" is the specific gravity of the molded body; "b" is the specific gravity (a calculated value) of the molded body with the premise that the voids were maintained; and "c" is the specific gravity (a calculated value) of the molded body with the premise that all the hollow particles collapsed.

The specific gravity of the molded body ("a" in the formula (A)) can be measured by an underwater replacement method in accordance with JIS K 7112.

The specific gravity of the molded body with the premise that the voids were maintained ("b" in the formula (A)) can be calculated by the following formula (B).

$$b = 1/\{(P_A/P_G)+(R_A/R_G)\} \quad \text{Formula (B)}$$

In the formula (B), $P_A$ is the amount of the added hollow particles; $P_G$ is the specific gravity of the hollow particles; $R_A$ is the amount of the added polypropylene resin; and $R_G$ is the specific gravity of the polypropylene resin.

The specific gravity of the molded body with the premise that all the hollow particles collapsed ("c" in the formula (A)) can be calculated by the following formula (C).

$$c = [R_G \times R_A + \{D_0 \times P_A \times (1-P_V/100)\}]/\{R_A+P_A \times (1-P_V/100)\} \quad \text{Formula}$$

(C)

In the formula (C), $R_A$ is the amount of the added polypropylene resin; $R_G$ is the specific gravity of the polypropylene resin; $D_0$ is the true density of the hollow particles; $P_A$ is the amount of the added hollow particles; and $P_V$ is the void ratio (%) of the hollow particles.

The residual void ratio measured by the press test method increases as the pressure resistance of the hollow particles improves. The residual void ratio of the hollow particles of the present disclosure is only required to be 80% or more, and it is preferably 85% or more, and more preferably 90% or more.

The residual void ratio measured by the press test method may be the average value of the sample number 10 (n=10). That is, it may be the average value of the residual void ratios measured for 10 sheet-shaped molded bodies produced by the above-described method. There is a small variation in the residual void ratio measured by the press test method, and the variation coefficient when n is 10 (n=10) can be 0.010 or less, for example. As just described, since the above-described press test is highly accurate, it can evaluate differences in pressure resistance attributable to the shell composition or structure, or to the shell uniformity relating to the shell composition, thickness, etc., which have been difficult to evaluate by conventional press tests.

As the detailed steps of the press test method, examples include, but are not limited to, the steps of a press test method employed in Examples described later.

As the polypropylene resin used in the press test, such polypropylene resin can be used, that the melt flow rate (MFR) at 230°C is from 10 g/min to 30 g/min (preferably from 15 g/min to 25 g/min). Commercially-available products of such polypropylene resin include, for example, NOVATEC-PP (product name, grade: MA1B, manufactured by: Japan Polypropylene Corporation, MFR at 230°C: 21 g/min).

The hollow particles of the present disclosure are hollow particles having a high void ratio of 50% or more; meanwhile, the residual void ratio measured by the press test method is 80% or more, and they have excellent pressure resistance. Since conventional hollow particles are poor in pressure resistance, they have difficulty in achieving a residual void ratio of 80% or more in the above-described press test method in which they are pressed at 60 MPa. To obtain hollow particles that can achieve a residual void ratio of 80% or more in the press test method, for example, the following are effective: improving the shell strength by controlling the composition of the polymerizable monomer used for the formation of the shell of the hollow particles, etc., and improving the shell uniformity relating to the shell composition, thickness and so on by controlling the particle diameter of the hollow particles, the type of the hydrophobic solvent to be included in the particles during the production process, etc. The reason for the poor pressure resistance of conventional hollow particles is presumed to be due to especially insufficient shell uniformity. It is presumed that improvement of the shell uniformity results in the improvement of the pressure resistance of the hollow particles and a residual void ratio of 80% or more in the press test method, which has been unattainable so far, since stress can be more uniformly applied to the hollow particles.

Hereinafter, an example of the method for producing the hollow particles of the present disclosure will be described. Then, the hollow particles of the present disclosure will be described in detail.

For example, the hollow particles of the present disclosure can be obtained by the hollow particle production method of the present disclosure, the method comprising:

preparing a mixture liquid containing a polymerizable monomer, a hydrophobic solvent, a polymerization initiator, a dispersion stabilizer and an aqueous medium,
suspending the mixture liquid to prepare a suspension in which droplets of a monomer composition containing the polymerizable monomer, the hydrophobic solvent and the polymerization initiator are dispersed in the aqueous medium, and
subjecting the suspension to a polymerization reaction to prepare a precursor composition containing precursor particles which have a hollow portion surrounded by a shell containing a resin and which include the hydrophobic solvent in the hollow portion.

The production method of the present disclosure follows the following basic technique: by carrying out the suspension treatment of the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which droplets are dispersed in the aqueous medium, the droplets having a distribution structure such that the polymerizable monomer is distributed on the surface side and the hydrophobic solvent is distributed in the center, is prepared. By subjecting the suspension to a polymerization reaction, the surface of the droplets is cured to form the hollow particles having the hollow portion filled with the hydrophobic solvent.

It is presumed that by controlling the composition of the polymerizable monomer, the type of the hydrophobic solvent, and so on in the basic technique, the following is achieved: sufficient phase separation between the polymerizable monomer and hydrophobic solvent in the droplets of the monomer composition dispersed in the suspension occurs, and the polymerization reaction of the polymerizable monomer uniformly proceeds when the suspension is subjected to a polymerization reaction, thereby forming the shell that is excellent in the uniformity of composition, thickness, etc.

The method for producing the hollow particles of the present disclosure includes the steps of preparing the mixture liquid, preparing the suspension, and subjecting the suspension to a polymerization reaction. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

A preferred embodiment of the method for producing the hollow particles of the present disclosure may be a production method including the following steps.

(1) Mixture liquid preparation step

The mixture liquid preparation step includes preparing the mixture liquid containing the polymerizable monomer, the hydrophobic solvent, the polymerization initiator, the dispersion stabilizer and the aqueous medium.

(2) Suspension step

The suspension step includes suspending the mixture liquid to prepare the suspension in which the droplets of the monomer composition containing the polymerizable monomer, the hydrophobic solvent and the polymerization initiator are dispersed in the aqueous medium.

(3) Polymerization step

The precursor composition preparation step includes subjecting the suspension to a polymerization reaction to prepare the precursor composition containing the precursor particles which have the hollow portion surrounded by the shell containing the resin and which include the hydrophobic solvent in the hollow portion.

(4) Solid-liquid separation step

The solid-liquid separation step includes performing solid-liquid separation of the precursor composition to obtain the precursor particles including the hydrophobic solvent in the hollow portion.

(5) Solvent removal step

The solvent removal step includes removing the hydrophobic solvent from the precursor particles obtained by the solid-liquid separation step to obtain the hollow particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

FIG. 1 is a schematic diagram showing an example of the method for producing the hollow particles of the present disclosure. The diagrams (1) to (5) in FIG. 1 correspond to the steps (1) to (5) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to the structures, dimensions and shapes of various materials shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer, the hydrophobic solvent and the polymerization initiator.

The diagram (2) of FIG. 1 is a schematic cross-sectional view showing an embodiment of the suspension in the suspension step. The suspension contains the aqueous medium 1 and droplets 8 of the monomer composition dispersed in the aqueous medium 1. The droplets 8 of the monomer composition contain the polymerizable monomer, the hydrophobic solvent and the polymerization initiator, and their distribution in the droplets is not uniform. The droplets 8 of the monomer composition have the following structure: phase separation occurs between a hydrophobic solvent 4a and a material 4b containing the polymerizable monomer and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition obtained by the polymerization step, which contains the precursor particles which include the hydrophobic solvent in the hollow portion. The precursor composition contains the aqueous medium 1 and precursor particles 9 which include the hydrophobic solvent 4a in the hollow portion and which are dispersed in the aqueous medium 1. A shell 6 forming the outer surface of the precursor particles 9 is formed by polymerization of the polymerizable monomer contained in the droplets 8 of the monomer composition. The precursor particles 9 contain, as the resin, the polymer of the polymerizable monomer.

The diagram (4) of FIG. 1 is a schematic cross-sectional view showing an embodiment of the precursor particles after the solid-liquid separation step. The diagram (4) of FIG. 1 shows a state where the aqueous medium 1 has been removed from the state shown in the diagram (3) of FIG. 1.

The diagram (5) of FIG. 1 is a schematic cross-sectional view showing an embodiment of the hollow particles after the solvent removal step. The diagram (5) of FIG. 1 shows a state where the hydrophobic solvent 4a has been removed from the state shown in the diagram (4) of FIG. 1. By the removal of the hydrophobic solvent from the precursor particles, hollow particles 10 having a gas-filled hollow portion 7 in the interior of the shell 6, are obtained.

Hereinbelow, the five steps described above and other steps are described in order.

(1) Mixture liquid preparation step

The mixture liquid preparation step includes preparing the mixture liquid containing the polymerizable monomer, the hydrophobic solvent, the polymerization initiator, the dispersion stabilizer and the aqueous medium. The mixture liquid may further contain other materials to the extent that does not impair the effects of the present disclosure.

The materials for the mixture liquid will be described in the following order: (A) the polymerizable monomer, (B) the hydrophobic solvent, (C) the polymerization initiator, (D) the dispersion stabilizer and (E) the aqueous medium.

(A) polymerizable monomer

As the polymerizable monomer, a known polymerizable monomer conventionally used for the formation of hollow particles can be used, without particular limitation. The polymerizable monomer preferably contains a crosslinkable monomer. When the polymerizable monomer contains a crosslinkable monomer, the crosslinking density of the shell can be improved. Accordingly, the shell excellent in strength is easily formed; the thus-obtained hollow particles easily become spherical; and the hollow portion that is clearly distinguished from the shell is easily formed in the interior of the particles.

From the point of view that the polymerization reaction is easily stabilized, the polymerizable monomer is preferably a polymerizable monomer in which the polymerizable functional group is a (meth)acryloyl group or a vinyl group, and it is more preferably an acrylic monomer which contains a (meth)acryloyl group as the polymerizable functional group. In the present disclosure, "the polymerization reaction is stabilized" means that the reactivity of the polymerization reaction is excellent, and the polymerization reaction uniformly proceeds.

The polymerizable monomer particularly preferably contains an acrylic monomer and a hydrocarbon monomer, from the point of view that the polymerization reaction is easily stabilized and the pressure resistance of the hollow particles can be improved. It is presumed that since the reactivity of the hydrocarbon monomer is improved by copolymerizing an acrylic monomer and a hydrocarbon monomer, the reactivity of the whole polymerizable monomer is improved and, as a result, the polymerization reaction is easily stabilized. It is also presumed that when the polymerizable monomer contains an acrylic monomer and a hydrocarbon monomer, the compatibility with the hydrophobic solvent becomes appropriate, and thereby, when the suspension is subjected to a polymerization reaction, the polymerization reaction of the polymerizable monomer easily proceeds uniformly, the thus-formed shell easily becomes a shell that is excellent in the uniformity of composition, thickness and so on, and accordingly, the pressure resistance of the hollow particles is improved.

From the point of view that the polymerization reaction is easily stabilized, the hydrocarbon monomer is preferably a hydrocarbon monomer in which the polymerizable functional group is a vinyl group.

In the present disclosure, a polymerizable monomer containing a (meth)acryloyl group as a polymerizable functional group is referred to as "acrylic monomer"; a crosslinkable monomer containing a (meth)acryloyl group as a polymerizable functional group is referred to as "crosslinkable acrylic monomer"; and a non-crosslinkable monomer containing a (meth)acryloyl group as a polymerizable functional group is referred to as "non-crosslinkable acrylic monomer". In the crosslinkable acrylic monomer, at least one polymerizable functional group is only required to be a (meth)acryloyl group, and all polymerizable functional groups are preferably (meth)acryloyl groups.

Also in the present disclosure, a polymerizable monomer composed of the elements carbon and hydrogen is referred to as "hydrocarbon monomer"; a crosslinkable monomer composed of the elements carbon and hydrogen is referred to as "crosslinkable hydrocarbon monomer"; and a non-crosslinkable monomer composed of the elements carbon and hydrogen is referred to as "non-crosslinkable hydrocarbon monomer".

The crosslinkable monomer used in the production method of the present disclosure is preferably a crosslinkable acrylic monomer or a crosslinkable hydrocarbon monomer.

As the crosslinkable acrylic monomer, examples include, but are not limited to, a difunctional crosslinkable acrylic monomer such as allyl (meth)acrylate, vinyl (meth)acrylate, ethylene glycol di(meth)acrylate, diethylene glycol di(meth)acrylate, pentaerythritol di(meth)acrylate, 2-hydroxy-3-(meth)acryloyloxypropyl (meth)acrylate, and tricyclodecane dimethanol di(meth)acrylate, and a trifunctional or higher-functional crosslinkable acrylic monomer such as trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly(meth)acrylate and ethoxylates thereof. Also, a crosslinkable macromer such as both-(meth)acrylic-terminated polyphenylene ether may be used, for example.

As the crosslinkable hydrocarbon monomer, examples include, but are not limited to, difunctional crosslinkable hydrocarbon monomers including an aromatic divinyl monomer such as divinylbenzene, divinylbiphenyl and divinylnaphthalene, and a diene monomer such as a linear or branched diolefin (e.g., butadiene, isoprene, 2,3-dimethylbutadiene, pentadiene and hexadiene) and an alicyclic diolefin (e.g., dicyclopentadiene, cyclopentadiene and ethylidene tetracyclododecene). Also, a crosslinkable macromer such as polybutadiene, polyisoprene, SBS (a block copolymer of butadiene and styrene) and SIS (a block copolymer of styrene and isoprene) may be used, for example.

In addition, as the crosslinkable monomer, examples include, but are not limited to, a crosslinkable allyl monomer such as diallyl phthalate, and a crosslinkable macromer such as both-vinyl-terminated polyphenylene ether.

These crosslinkable monomers may be used alone or in combination of two or more.

From the viewpoint of improving the strength of the shell and obtaining the hollow particles excellent in pressure resistance, the crosslinkable monomer preferably contains a trifunctional or higher-functional crosslinkable monomer containing three or more polymerizable functional groups.

Preferred as the trifunctional or higher-functional crosslinkable monomer are the above-described trifunctional or higher-functional crosslinkable acrylic monomers. Of them, pentaerythritol tetra(meth)acrylate, trimethylolpropane tri(meth)acrylate, ethoxylated trimethylolpropane tri(meth)acrylate, ethoxylated pentaerythritol tetra(meth)acrylate, pentaerythritol tri(meth)acrylate and dipentaerythritol poly(meth)acrylate are preferred, and pentaerythritol tetra(meth)acrylate and trimethylolpropane tri(meth)acrylate are more preferred.

From the viewpoint of improving the strength of the shell and obtaining the hollow particles excellent in pressure resistance, the crosslinkable monomer more preferably contains a difunctional crosslinkable monomer containing only two polymerizable functional groups and a trifunctional or higher-functional crosslinkable monomer containing three or more polymerizable functional groups.

The difunctional crosslinkable monomer is preferably at least one selected from the group consisting of the difunctional crosslinkable acrylic monomer and the difunctional crosslinkable hydrocarbon monomer.

Preferred as the difunctional crosslinkable acrylic monomer are ethylene glycol di(meth)acrylate and pentaerythritol di(meth)acrylate, and ethylene glycol di(meth)acrylate is more preferred.

The difunctional crosslinkable hydrocarbon monomer is particularly preferably divinylbenzene.

From the viewpoint of improving the pressure resistance of the hollow particles, in 100 parts by mass of the polymerizable monomer, the content of the crosslinkable monomer is preferably 50 parts by mass or more, more preferably 60 parts by mass or more, still more preferably 70 parts by mass or more, and even more preferably 80 parts by mass or more. When the content of the crosslinkable monomer is equal to or more than the lower limit value, the hollow portion is likely to be formed in the interior of the particles; the particles are likely to be spherical; and since the crosslinking density of the shell can be improved, there is an advantage that the solvent resistance, strength, heat resistance and so on of the hollow particles can be improved. On the other hand, the polymerizable monomer may contain a non-crosslinkable monomer to the extent that does not impair the effects of the present disclosure. In this case, in 100 parts by mass of the polymerizable monomer, the content of the crosslinkable monomer may be 95 parts by mass or less, or it may be 90 parts by mass or less, for example.

The content of the crosslinkable monomer is the total content of the difunctional crosslinkable monomer and the trifunctional or higher-functional crosslinkable monomer.

When the crosslinkable monomer contains the trifunctional or higher-functional crosslinkable monomer, from the viewpoint of improving the pressure resistance of the hollow particles, in 100 parts by mass of the polymerizable monomer, the lower limit of the content of the trifunctional or higher-functional crosslinkable monomer is preferably 10 parts by mass or more, and more preferably 20 parts by mass or more. The upper limit is preferably 50 parts by mass or less, more preferably 40 parts by mass or less, and still more preferably 30 parts by mass or less.

When the crosslinkable monomer contains the difunctional crosslinkable monomer and the trifunctional or higher-functional crosslinkable monomer, from the viewpoint of improving the pressure resistance of the hollow particles, with respect to the total mass (100 parts by mass) of the difunctional crosslinkable monomer and the trifunctional or higher-functional crosslinkable monomer, the lower limit of the content of the trifunctional crosslinkable monomer is preferably 5 parts by mass or more, more preferably 10 parts by mass or more, and still more preferably 20 parts by mass or more. On the other hand, the upper limit is preferably 50 parts by mass or less, and more preferably 40 parts by mass or less.

The polymerizable monomer may contain a non-crosslinkable monomer, to the extent that does not impair the effects of the present disclosure. As the non-crosslinkable monomer, examples include, but are not limited to, a non-crosslinkable acrylic monomer such as (meth)acrylic acid alkyl ester (e.g., methyl (meth)acrylate, ethyl (meth)acrylate, butyl (meth)acrylate, 2-ethylhexyl (meth)acrylate, lauryl (meth)acrylate), glycidyl (meth)acrylate, 2-hydroxyethyl (meth)acrylate, 2-aminoethyl (meth)acrylate, t-butylaminoethyl (meth)acrylate, (meth)acrylic acid, (meth)acrylamide, N-methylol (meth)acrylamide, N-butoxymethyl (meth)acrylamide, methoxypolyethylene glycol (meth)acrylate, ethoxypolyethylene glycol (meth)acrylate, propoxypolyethylene glycol (meth)acrylate, butoxypolyethylene glycol (meth)acrylate, hexaoxypolyethylene glycol (meth)acrylate, octoxypolyethylene glycol polypropylene glycol (meth)acrylate, lauroxypolyethylene glycol (meth)acrylate, stearoxypolyethylene glycol (meth)acrylate, phenoxypolyethylene glycol polypropylene glycol (meth)acrylate, polyethylene glycol mono(meth)acrylate, polypropylene glycol mono(meth)acrylate, polyethylene glycol propylene glycol mono(meth)acrylate, polyethylene glycol tetramethylene glycol (meth)acrylate, propylene glycol polybutylene glycol mono(meth)acrylate, and monoethylene glycol mono(meth)acrylate; a non-crosslinkable hydrocarbon monomer such as an aromatic monovinyl monomer such as styrene, vinyl toluene, $\alpha$-methylstyrene, p-methylstyrene, ethylvinylbenzene, ethylvinylbiphenyl and ethylvinylnaphthalene, and a monoolefin monomer such as a linear or branched monoolefin (e.g., ethylene, propylene and butylene) and an alicyclic monoolefin (e.g., vinylcyclohexane, norbornene, tricyclododecene and 1,4-methano-1,4,4a,9a-tetrahydrofluorene); a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; and a vinylpyridine monomer. Also, a non-crosslinkable macromer such as (meth)acrylic-terminated polystyrene and (meth)acrylic-terminated polymethyl methacrylate may be used, for example. These non-crosslinkable monomers may be used alone or in combination of two or more.

As the non-crosslinkable monomer, a (meth)acrylic acid alkyl ester and an aromatic monovinyl monomer are preferred, and an aromatic monovinyl monomer is more preferred, from the point of view that the polymerization reaction is easily stabilized, and a decrease in the pressure resistance of the hollow particles is suppressed. As the (meth)acrylic acid alkyl ester, butyl acrylate and methyl methacrylate are particularly preferred. As the aromatic monovinyl monomer, ethylvinylbenzene is particularly preferred.

From the viewpoint of improving the stability of the polymerization reaction, in 100 parts by mass of the polymerizable monomer, the content of the acrylic monomer is preferably 10 parts by mass or more, and more preferably 20 parts by mass or more.

From the viewpoint of improving the stability of the polymerization reaction and improving the pressure resistance of the hollow particles, in 100 parts by mass of the polymerizable monomer, the content of the acrylic monomer and the hydrocarbon monomer is preferably 80 parts by mass or more, more preferably 90 parts by mass or more, still more preferably 98 parts by mass or more, and even more preferably 99 parts by mass or more.

When the polymerizable monomer contains the acrylic monomer and the hydrocarbon monomer, from the viewpoint of improving the pressure resistance of the hollow particles, with respect to a total 100 parts by mass of the acrylic monomer and the hydrocarbon monomer, the lower limit of the content of the hydrocarbon monomer is preferably 10 parts by mass or more, more preferably 20 parts by mass or more, and still more preferably 30 parts by mass or more. The upper limit is preferably 90 parts by mass or less, and more preferably 80 parts by mass or less.

The content of the polymerizable monomer in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the lower limit of the content of the polymerizable monomer is preferably 30% by mass or more, and more preferably 40% by mass or more. The upper limit is preferably 60% by mass or less, and more preferably 50% by mass or less.

From the viewpoint of the mechanical strength of the hollow particles, the content of the polymerizable monomer is preferably 95% by mass or more, and more preferably 97% by mass or more, with respect to the total mass (100% by mass) of a solid component obtained by excluding the hydrophobic solvent from the material for the oil phase in the mixture liquid.

In the present disclosure, the solid component includes all components excluding solvent, and a liquid polymerizable monomer and the like are included in the solid component.


(B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

The hydrophobic solvent can be appropriately selected from known hydrophobic solvents, without particular limitation. As the hydrophobic solvent, examples include, but are not limited to, an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferably used.

As the hydrocarbon solvent, examples include, but are not limited to, an aromatic hydrocarbon solvent such as benzene, toluene and xylene, and aliphatic hydrocarbons including a chain hydrocarbon solvent such as pentane, hexane, heptane, octane, 2-methylbutane and 2-methylpentane, and a cyclic hydrocarbon solvent such as cyclohexane, methylcyclohexane and cycloheptane.

These hydrophobic solvents may be used alone or in combination of two or more.

From the point of view that phase separation easily occurs between the polymerizable monomer and hydrophobic solvent in the droplets of the monomer composition during the suspension step, such an organic solvent is preferably selected as the hydrophobic solvent, that the water solubility is smaller than the crosslinkable monomer contained in the polymerizable monomer.

When the polymerizable monomer contains the acrylic monomer and the hydrocarbon monomer, a chain hydrocarbon solvent is preferably used as the hydrophobic solvent. The chain hydrocarbon solvent is preferably a chain hydrocarbon solvent containing 5 to 8 carbon atoms, and more preferably at least one kind selected from the group consisting of pentane, hexane, heptane and octane.

When the polymerizable monomer contains the acrylic monomer and does not contain the hydrocarbon monomer, a hydrocarbon solvent containing 4 to 7 carbon atoms is preferably used as the hydrophobic solvent, and a hydrocarbon solvent containing 5 to 7 carbon atoms is more preferably used as the hydrophobic solvent. The hydrocarbon solvent may be an aromatic or aliphatic hydrocarbon, and it is preferably an aliphatic hydrocarbon, more preferably a cyclic hydrocarbon solvent, and still more preferably at least one selected from the group consisting of cyclohexane, cycloheptane and methylcyclohexane.

The above-described combination of the polymerizable monomer and the hydrophobic solvent is preferably used, since the pressure resistance of the hollow particles is easily improved. The use of the combination of the polymerizable monomer containing the acrylic monomer and the hydrocarbon monomer and the preferred hydrophobic solvent described above, is particularly preferred, since the uniformity of the shell is improved, and the pressure resistance of the hollow particles is improved, accordingly.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent used in the production method of the present disclosure, is preferably 2.5 or less, and more preferably 2.0 or less. The relative permittivity is one of the indices of the level of the polarity of a compound. In the case where the relative permittivity of the hydrophobic solvent is 2.5 or less and sufficiently small, it is considered that phase separation progresses rapidly in the droplets of the monomer composition and the hollow portion is easily formed.

Examples of hydrophobic solvents having a relative permittivity at 20°C of 2.0 or less, are as follows. The inside of the parentheses is the value of relative permittivity.
Pentane (1.8), hexane (1.9), heptane (1.9), octane (1.9), cyclohexane (2.0).

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the polymerizable monomer and so on include the hydrophobic solvent. Accordingly, as the content of the hydrophobic solvent increases, the void ratio of the obtained hollow particles tends to increase.

In the present disclosure, with respect to 100 parts by mass of the polymerizable monomer, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. The content of the hydrophobic solvent in the mixture liquid is more preferably 70 parts by mass or more and 300 parts by mass or less, and still more preferably 90 parts by mass or more and 200 parts by mass or less, with respect to 100 parts by mass of the polymerizable monomer.

(C) Polymerization initiator

In the production method of the present disclosure, the mixture liquid preferably contains an oil-soluble polymerization initiator as the polymerization initiator. As the method for polymerizing the droplets of the monomer composition after suspending the mixture liquid, examples include an emulsion polymerization method using a water-soluble polymerization initiator and a suspension polymerization method using an oil-soluble polymerization initiator. By using the oil-soluble polymerization initiator, suspension polymerization can be performed.

The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile).

With respect to 100 parts by mass of the polymerizable monomer in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is equal to or more than the lower limit value, a polymerization reaction can progress sufficiently. When the content of the polymerization initiator is equal to or less than the upper limit value, the oil-soluble polymerization initiator is less likely to remain after the end of the polymerization reaction, and an unexpected side reaction is less likely to progress.

(D) Dispersion stabilizer

The dispersion stabilizer is an agent for dispersing the droplets of the monomer composition in the aqueous medium in the suspension step. As the dispersion stabilizer, examples include, but are not limited to, an inorganic dispersion stabilizer, an organic or inorganic water-soluble polymer stabilizer, and a surfactant. In the present disclosure, an inorganic dispersion stabilizer is preferably used as the dispersion stabilizer, from the point of view that the particle diameter of the droplets can be easily controlled in the suspension, and the particle size distribution of the obtained hollow particles can be sharp, and that an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron(II)hydroxide; and silicon dioxide. These inorganic dispersion stabilizers may be used alone or in combination of two or more.

Of these inorganic dispersion stabilizers, a sparingly water-soluble inorganic dispersion stabilizer is preferred; a sparingly water-soluble metal salt such as the above-mentioned sulfate, carbonate, phosphate and metal hydroxide is more preferred; a metal hydroxide is still more preferred; and magnesium hydroxide is particularly preferred.

In the present disclosure, "sparingly water-soluble" is preferably such that the solubility in 100 g of water is 0.5 g or less.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred. The water-soluble polyvalent metal salts may be used alone or in combination of two or more.

The method for reacting the water-soluble polyvalent metal salt with the at least one selected from alkali metal hydroxide salts and alkaline earth metal hydroxide salts in the aqueous medium, is not particularly limited. As the method, examples include, but are not limited to, mixing an aqueous solution of the water-soluble polyvalent metal salt and an aqueous solution of the at least one selected from alkali metal hydroxide salts and alkaline earth metal hydroxide salts.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (e.g., polyacrylic acid), a cellulose (e.g., hydroxyethyl cellulose, carboxymethyl cellulose, methyl cellulose, ethyl cellulose), polyvinylpyrrolidone, polyacrylimide, polyethylene oxide and a poly(hydroxystearic acid-g-methyl methacrylate-co-methacrylic acid) copolymer.

As an inorganic water-soluble high-molecular-weight compound, examples include, but are not limited to, sodium tripolyphosphate.

The surfactant is a compound containing both a hydrophilic group and a hydrophobic group per molecule. As the surfactant, examples include, but are not limited to, a known ionic surfactant such as an anionic surfactant, a cationic surfactant and an ampholytic surfactant, and a known nonionic surfactant.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is preferably from 0.5 parts by mass to 15 parts by mass, and more preferably from 0.5 parts by mass to 10 parts by mass.

(E) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO).

The content of the aqueous medium is not particularly limited. From the viewpoint of controlling the particle diameter and void ratio of the hollow particles in the preferred ranges described below, with respect to 100 parts by mass of the polymerizable monomer contained in the mixture liquid, the lower limit of the content of the aqueous medium is preferably 200 parts by mass or more, more preferably 400 parts by mass or more, and still more preferably 600 parts by mass or more. The upper limit is preferably 1000 parts by mass or less, and more preferably 800 parts by mass or less.

The mixture liquid may further contain other materials that are different from the above-mentioned materials (A) to (E), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the polymerizable monomer, (B) the hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye,

12

depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the polymerizable monomer, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, hollow particles such that the composition of the shell portion is uniform, can be produced. Also, the particle diameter of the hollow particles can be easily controlled.

(2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited, and a known suspension method can be employed. A disperser is used to prepare the suspension, and it may be a commercially-available mixer. As the mixer, examples include, but are not limited to, a horizontal or vertical in-line disperser such as MILDER (product name, manufactured by Pacific Machinery & Engineering Co., Ltd.), CAVITRON (product name, manufactured by EUROTEC, Ltd.) and an in-line disperser manufactured by IKA (e.g., DISPAX-REACTOR (registered trademark) DRS (product name)), and an emulsifying disperser such as HOMOMIXER MARK II series manufactured by PRIMIX Corporation.

In the suspension prepared in the suspension step, the droplets of the monomer composition containing the lipophilic materials mentioned above and having a particle diameter of approximately from 5 um to 40 $\mu$m, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the monomer composition dispersed in the aqueous medium are formed by the oil-soluble monomer composition and the dispersion stabilizer surrounding the periphery of the oil-soluble monomer composition. The droplets of the monomer composition contain the oil-soluble polymerization initiator, the polymerizable monomer and the hydrophobic solvent.

The droplets of the monomer composition are minute oil droplets, and the oil-soluble polymerization initiator generates polymerization initiating radicals in the interior of the minute oil droplets. Therefore, the precursor particles having a target particle diameter can be produced without an excessive growth of the minute oil droplets.

In such a suspension polymerization method using the oil-soluble polymerization initiator, there is no opportunity for the polymerization initiator to come into contact with the polymerizable monomer dispersed in the aqueous medium. Thus, the subgeneration of surplus resin particles (e.g., solid particles having a relatively small particle diameter) in addition to the target resin particles having the hollow portion, can be suppressed by using the oil-soluble polymerization initiator.

(3) Polymerization step

The polymerization step includes subjecting the suspension obtained by the above-described suspension step to a polymerization reaction to prepare a precursor composition containing precursor particles which have a hollow portion surrounded by a shell containing a resin and which include the hydrophobic solvent in the hollow portion. The precursor particles are formed by polymerization of the polymerizable monomer contained in the droplets of the monomer composition, and the shell of the precursor particles contains the polymer of the polymerizable monomer as the resin.

The polymerization system is not particularly limited. For example, a batch system, a semicontinuous system or a continuous system may be employed.

The polymerization temperature is preferably from 40°C to 90°C, and more preferably from 50°C to 80°C.

The polymerization reaction time is preferably from 1 hour to 48 hours, and more preferably from 4 hours to 36 hours.

Also, in the polymerization step of the production method of the present disclosure, during the polymerization reaction of the polymerizable monomer in the suspension, a polymerizable monomer may be further added to further continue the polymerization reaction. By carrying out the polymerization reaction in two stages in the polymerization step, the pressure resistance of the hollow particles may be improved.

In the polymerization step, the shell portion of the droplets of the monomer composition, which contain the hydrophobic solvent in the interior, polymerizes. Accordingly, as described above, the hollow portion filled with the hydrophobic solvent is formed in the interior of the obtained precursor particles.

(4) Solid-liquid separation step

The solid-liquid separation step includes performing solid-liquid separation of the precursor composition which contains the precursor particles and which is obtained by the above-described polymerization step, to obtain a solid component containing the precursor particles.

The method of performing the solid-liquid separation of the precursor composition is not particularly limited, and a known method may be used. Examples of the solid-liquid separation method include a centrifugation method, a filtration method, and still-standing separation. Among them, a centrifugation method or a filtration method may be employed, and from the viewpoint of simplicity of the operation, a centrifugation method may be employed.

Any step such as a preliminary drying step may be performed at a time after the solid-liquid separation step and before performing the solvent removal step described later. Examples of the preliminary drying step include performing preliminary drying on the solid component obtained after the solid-liquid separation step, by use of a drying apparatus such as a dryer and a drying appliance such as a hand dryer.

(5) Solvent removal step

The solvent removal step includes removing the hydrophobic solvent from the precursor particles obtained by the solid-liquid separation step.

For example, by removing the hydrophobic solvent from the precursor particles in a gaseous atmosphere, the hydrophobic solvent in the interior of the precursor particles is substituted with air, and the hollow particles filled with gas are obtained.

In this step, the term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is important to remove the hydrophobic solvent in an environment where the precursor particles come into direct contact with the outside gas.

The method of removing the hydrophobic solvent from the precursor particles in a gaseous atmosphere, is not particularly limited, and a known method may be employed. Examples of the method include a reduced pressure drying method, a heat drying method, a flash drying method, and the combination of these methods.

Especially, in the case of using the heat drying method, the heating temperature needs to be set to more than or equal to the boiling point of the hydrophobic solvent and less than or equal to the highest temperature at which the shell structure of the precursor particles does not collapse. Accordingly, depending on the composition of the shell and the type of the hydrophobic solvent in the precursor particles, the heating temperature may be from 50°C to 200°C, may be from 70°C to 200°C, or may be from 100°C to 200°C, for example.

The hydrophobic solvent in the interior of the precursor particles is substituted with the outside gas by the drying operation in the gaseous atmosphere. As a result, the hollow particles in which the hollow portion is occupied by gas, are obtained.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

As another method, the hydrophobic solvent may be removed as follows: the precursor composition obtained in the polymerization step, which is in the form of slurry, is not subjected to solid-liquid separation and, instead, the hydrophobic solvent may be removed in the slurry containing the precursor particles and the aqueous medium.

In this method, for example, at a temperature equal to or more than the temperature obtained by subtracting 35°C from the boiling point of the hydrophobic solvent, an inert gas is bubbled into the precursor composition. Accordingly, the hydrophobic solvent can be removed from the precursor particles.

When the hydrophobic solvent is a mixed solvent containing several types of hydrophobic solvents and it has several boiling points, the boiling point of the hydrophobic solvent in the solvent removal step is determined as the boiling point of the solvent having the highest boiling point among the solvents contained in the mixed solvent, that is, the highest boiling point of the several boiling points.

The temperature at the time of bubbling the inert gas into the precursor composition, is preferably a temperature equal to or more than the temperature obtained by subtracting 30°C from the boiling point of the hydrophobic solvent, and more preferably a temperature equal to or more than the temperature obtained by subtracting 20°C from the boiling point of the hydrophobic solvent, from the viewpoint of reducing the amount of the residual hydrophobic solvent in the hollow particles. The temperature at the time of bubbling is generally set to a temperature equal to or more than the polymerization temperature of the polymerization step. The temperature at the time of bubbling is not particularly limited, and it may be 50°C or more and 100°C or less.

The inert gas used for the bubbling is not particularly limited. As the inert gas, examples include, but are not limited to, nitrogen and argon.

Depending on the type and amount of the hydrophobic solvent, the bubbling condition is appropriately controlled so that the hydrophobic solvent can be removed from the precursor particles. The bubbling condition is not particularly limited. For example, the inert gas may be bubbled in an amount of 1 L/min to 3 L/min for 1 hour to 10 hours.

By this method, a slurry of the hollow particles including an inert gas is obtained. The slurry is subjected to solid-liquid separation to obtain hollow particles, and the residual aqueous medium is removed from the hollow particles, thereby obtaining the hollow particles in which the hollow portion is occupied by gas.

The method for obtaining the hollow particles in which the hollow portion is filled with gas, by subjecting the precursor composition in the form of slurry to solid-liquid separation and then removing the hydrophobic solvent from the precursor particles in the gaseous atmosphere, is compared to the method for obtaining the hollow particles in which the hollow portion is filled with gas, by removing, in the slurry containing the precursor particles and the aqueous medium, the hydrophobic solvent from the precursor particles, subjecting the slurry to solid-liquid separation, and then removing the residual aqueous medium from the hollow particles in the gaseous atmosphere. As a result, the former method is advantageous in that the hollow particles are less likely to collapse in the hydrophobic solvent removal step, and the latter method is advantageous in that the amount of the residual hydrophobic solvent is decreased by bubbling the inert gas.

Also, the hydrophobic solvent included in the precursor particles may be removed therefrom after the polymerization step and before the solid-liquid separation step, without the solid-liquid separation of the slurry precursor composition obtained in the polymerization step, by use of the following method, for example: evaporating the hydrophobic solvent included in the precursor particles from the precursor composition at a predetermined pressure (a high, normal or reduced pressure), or evaporating the hydrophobic solvent included in the precursor particles from the precursor composition by introducing water vapor or inert gas such as nitrogen, argon and helium to the precursor composition at a predetermined pressure (a high, normal or reduced pressure).

(6) Others

In addition to the steps (1) to (5) mentioned above, the following washing step (6-a) and the following particle interior substitution step (6-b) may be added, for example.

(6-a) Washing step

The washing step includes carrying out washing by adding acid or alkali, for removal of the dispersion stabilizer remaining in the precursor composition containing the precursor particles before the solvent removal step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic compound, washing is preferably carried out by adding alkali to the precursor composition containing the precursor particles.

When the acid-soluble inorganic dispersion stabilizer is used as the dispersion stabilizer, the pH of the precursor composition is preferably adjusted to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(6-b) Particle interior substitution step

The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

The hollow particles of the present disclosure contain the polymer of the above-described polymerizable monomer as the main component of the shell, and the polymer forms the skeleton of the shell of the hollow particles.

In the hollow particles of the present disclosure, from the viewpoint of improving the pressure resistance, the polymer contained in the shell preferably contains crosslinkable monomer units. In 100 parts by mass of all monomer units of the polymer, the content of the crosslinkable monomer units is preferably 50 parts by mass or more, more preferably 60 parts by mass or more, still more preferably 70 parts by mass or more, and even more preferably 80 parts by mass or more. On the other hand, the polymer may contain non-crosslinkable monomer units to the extent that does not impair the effects of the present disclosure. In this case, in 100 parts by mass of all monomer units of the polymer, the content of the crosslinkable monomer units may be 95 parts by mass or less, or it may be 90 parts by mass or less, for example.

In the hollow particles of the present disclosure, from the viewpoint of improving the pressure resistance, the polymer contained in the shell preferably contains trifunctional or higher-functional crosslinkable monomer units. In 100 parts by mass of all monomer units of the polymer, the lower limit of the content of the trifunctional or higher-functional crosslinkable monomer units is preferably 10 parts by mass or more, and more preferably 20 parts by mass or more. The upper limit is preferably 50 parts by mass or less, more preferably 40 parts by mass or less, and still more preferably 30 parts by mass or less.

In the hollow particles of the present disclosure, from the viewpoint of improving the pressure resistance, the polymer contained in the shell preferably contains difunctional crosslinkable monomer units and trifunctional or higher-functional crosslinkable monomer units. When the polymer contains difunctional crosslinkable monomer units and trifunctional or higher-functional crosslinkable monomer units, in a total 100 parts by mass of the difunctional crosslinkable monomer units and the trifunctional or higher-functional crosslinkable monomer units, the content of the trifunctional or higher-functional crosslinkable monomer units is preferably 5 parts by mass or more, more preferably 10 parts by mass or more, and still more preferably 20 parts by mass or more. On the other hand, it is preferably 50 parts by mass or less, and more preferably 40 parts by mass or less.

In the present disclosure, the crosslinkable monomer units derived from the difunctional crosslinkable monomer may be referred to as "difunctional crosslinkable monomer units", and the crosslinkable monomer units derived from the trifunctional or higher-functional crosslinkable monomer may be referred to as "trifunctional or higher-functional crosslinkable monomer units".

Also in the hollow particles of the present disclosure, from the point of view that the uniformity of the shell is easily improved, the polymer contained in the shell preferably contains acrylic monomer units. The content of the acrylic monomer units is not particularly limited. In 100% by mass of all monomer units, the content of the acrylic monomer units is preferably 10 parts by mass or more, and more preferably 20 parts by mass or more.

Also in the hollow particles of the present disclosure, from the point of view that the shell uniformity is easily improved and the pressure resistance is improved, the polymer contained in the shell preferably contains acrylic monomer units and hydrocarbon monomer units.

In 100 parts by mass of all monomer units of the polymer, the total content of the acrylic monomer units and the hydrocarbon monomer units is preferably 80 parts by mass or more, more preferably 90 parts by mass or more, still more preferably 98 parts by mass or more, and even more preferably 99 parts by mass or more.

When the polymer contained in the shell contains the acrylic monomer units and the hydrocarbon monomer units, from the viewpoint of improving the pressure resistance of the hollow particles, in a total 100 parts by mass of the acrylic monomer units and the hydrocarbon monomer units, the lower limit of the content of the hydrocarbon monomer units is preferably 10 parts by mass or more, more preferably 20 parts by mass or more, and still more preferably 30 parts by mass or more. The upper limit is preferably 90 parts by mass or less, and more preferably 80 parts by mass or less.

In the total solid content (100% by mass) of the shell, the content of the polymer of the polymerizable monomer is preferably 96% by mass or more, and more preferably 97% by mass or more. By adjusting the content of the polymer to equal to or more than the lower limit value, a decrease in the pressure resistance of the hollow particles can be suppressed. That is, from the viewpoint of suppressing a decrease in the pressure resistance of the hollow particles, in the total solid content (100% by mass) of the shell, the content of the components other than the polymer is preferably 4% by mass or less, and more preferably 3% by mass or less.

As the components other than the polymer contained in the hollow particles of the present disclosure, examples include, but are not limited to, residual unreacted polymerizable monomers, polymers different from the polymer of the polymerizable monomer, the decomposition product of the polymerization initiator, and low-molecular compounds contained as impurities in the raw materials for the polymerizable monomer. When the components have a low boiling point (e.g., a boiling point of 200°C or less), they are generally removed in the process of producing the hollow particles. However, when the components have a high boiling point (e.g., a boiling point of 250°C or more), there is a possibility that they are not removed and remain.

The void ratio of the hollow particles of the present disclosure is 50% or more. It is preferably 60% or more, and more preferably 65% or more. When the void ratio is equal to or more than the lower limit value, the hollow particles are excellent in lightness in weight, heat insulation property, dielectric property and so on. The upper limit of the void ratio of the hollow particles is not particularly limited. From the viewpoint of suppressing a decrease in the pressure resistance of the hollow particles, the upper limit is preferably 90% or less, more preferably 85% or less, and still more preferably 80% or less.

The void ratio of the hollow particles can be calculated from the apparent density $D_1$ and true density $D_0$ of the hollow particles.

A method for measuring the apparent density $D_1$ of the hollow particles is as follows. First, approximately 30 $cm^3$ of the hollow particles are introduced into a measuring flask with a volume of 100 $cm^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ $(g/cm^3)$ of the hollow particles is calculated by the following formula (I).

Apparent density $D_1$ = [Mass of the hollow particles]/(100-[Mass of the isopropanol]/[Specific gravity of the isopropanol at the measuring temperature])　　　　　　　　　　Formula (I)

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 $cm^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ $(g/cm^3)$ of the hollow particles is calculated by the following formula (II).

True density $D_0$ = [Mass of the pulverized hollow particles]/(100-[Mass of the isopropanol]/[Specific gravity of the isopropanol at the measuring temperature])　　　　　　　　　　Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

Void ratio (%) = 100-(Apparent density $D_1$/True density $D_0$)×100　　　　　　　　　　Formula (III)

In the present disclosure, the lower limit of the volume average particle diameter of the hollow particles is preferably 5.0 um or more, more preferably 6.0 um or more, and still more preferably 7.0 um or more. On the other hand, the upper limit of the volume average particle diameter of the hollow particles is preferably 40.0 um or less, more preferably 30.0 um or less, and still more preferably 20.0 um or less. When the volume average particle diameter of the hollow particles is equal to or more than the lower limit value, both a high void ratio and excellent pressure resistance are easily obtained; the aggregability of the hollow particles decreases; and the hollow particles exert excellent dispersibility, accordingly. When the volume average particle diameter of the hollow particles is equal to or less than the upper limit value, the uniformity of the shell is easily improved, and the hollow particles excellent in pressure resistance are easily obtained, accordingly.

The particle diameter of the hollow particles of the present disclosure can be controlled by, for example, the content of the dispersion stabilizer with respect to the total mass of the polymerizable monomer and the hydrophobic solvent.

The thickness of the shell of the hollow particles of the present disclosure, is not particularly limited. From the viewpoint of improving the pressure resistance, the shell thickness is preferably 0.30 um or more, more preferably 0.40 um or more, still more preferably 0.50 um or more, and even more preferably 0.60 um or more. From the viewpoint of increasing the void ratio, it is preferably 3.00 um or less, more preferably 2.00 um or less, and still more preferably 1.50 um or less.

In the present disclosure, the thickness of the shell of the hollow particles is a value calculated as follows. The inner diameter r of the hollow particles is calculated by the following formula (1) using the volume average particle diameter R and void ratio of the hollow particles, and the thickness of the shell is calculated by the following formula (2) using the inner diameter r and the volume average particle diameter R.

$$4/3\pi \times (R/2)^3 \times (\text{Void ratio}/100) = 4/3\pi \times (r/2)^3 \quad \text{Formula (1)}$$

$$\text{Shell thickness} = (R-r)/2 \quad \text{Formula (2)}$$

The void ratio in the formula (1) is a numerical value expressed in percentage.

The particle size distribution (volume average particle diameter (Dv)/number average particle diameter (Dn)) of the hollow particles may be 1.1 or more and 2.5 or less, for example. When the particle size distribution is 2.5 or less, hollow particles such that compressive strength and heat resistance slightly vary between the hollow particles, can be obtained. Also when the particle size distribution is 2.5 or less, a product having uniform thickness can be produced in the case of producing, for example, a sheet-shaped molded body mixed with the hollow particles of the present disclosure.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is found by dividing the volume average particle diameter by the number average particle diameter.

The shape of the hollow particles of the present disclosure is not particularly limited, as long as the hollow portion is formed in the interior. As the shape, examples include, but are not limited to, a spherical shape, an ellipsoidal shape and an irregular shape. Among them, a spherical shape is preferable in terms of ease of production, pressure resistance and so on.

The hollow particles of the present disclosure may have one or two or more hollow portions. From the viewpoint of maintaining good balance between the high void ratio and the mechanical strength, the hollow particles preferably have only one hollow portion. In the hollow particles of the present disclosure, the percentage of the particles having only one or two hollow portions is preferably 90% by mass or more, and more preferably 95% by mass or more. Moreover, the percentage of the particles having only one hollow portion is preferably 90% by mass or more, and more preferably 95% by mass or more.

The shell of the hollow particles of the present disclosure and, when the hollow particles have two or more hollow portions, a partition separating the adjacent hollow portions from each other may be porous. From the viewpoint of improving the pressure resistance, the shell and the partition are preferably solid.

The average circularity of the hollow particles of the present disclosure may be from 0.950 to 0.995.

An example of the image of the shape of the hollow particles of the present disclosure, is a bag made of a thin film and inflated with gas. A cross-section of the bag is like the hollow particle 10 shown in the diagram (5) of FIG. 1. In this example, one thin film is provided on the outside, and the interior is filled with gas.

The shape of the particles can be determined by SEM or TEM, for example.

In the hollow particles of the present disclosure, from the viewpoint of pressure resistance, the percentage of particles having a circularity of 0.85 or less is preferably small. The particles having a circularity of 0.85 or less are typically cracked particles or deformed particles such as dented particles. In the present disclosure, such particles may be referred to as "irregular-shaped particles". Such irregular-shaped particles are poor in pressure resistance compared to spherical particles, since external pressure is likely to be locally applied thereto. In addition, the irregular-shaped particles have the following problem: compared to spherical particles, the irregular-shaped particles are poor in dispersibility since they are likely to aggregate when dispersed in the binder resin. When the irregular-shaped particles are dispersed in the binder resin, aggregates are likely to be formed; external pressure is likely to be applied to the aggregates; and the pressure resistance further deteriorates, accordingly. Therefore, the dispersibility and pressure resistance of the hollow particles can be improved by decreasing the percentage of the irregular-shaped particles included in the hollow particles.

The hollow particles of the present disclosure may contain, as impurities, small amounts of particles having a low circularity, such as cracked or deformed particles. In 100% by mass of the hollow particles of the present disclosure, the percentage of the particles having a circularity of 0.85 or less is preferably 10% by mass or less, more preferably 7% by mass or less, still more preferably 5% by mass or less, even more preferably 4% by mass or less, and particularly preferably 3% by mass or less.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles becomes more complex.

In the present disclosure, the circularity is measured by use of a flow particle image analyzer at an image resolution of 0.185 um/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 to 3000 particles.

The thermal decomposition initiation temperature of the hollow particles of the present disclosure is preferably from 150°C to 400°C, and more preferably from 200°C to 350°C. When the thermal decomposition initiation temperature is in the range, the hollow particles are excellent in heat resistance.

In the present disclosure, the thermal decomposition initiation temperature of the hollow particles can be measured as a 5% weight reduction temperature, using a TG-DTA device in an air atmosphere, in the conditions of an air flow rate of 230 mL/min and a temperature increase rate of 10°C/min.

Due to having excellent pressure resistance, the hollow particles of the present disclosure are less likely to collapse when mixed and kneaded with other materials and even when molded after mixing and kneading with other materials. When they are added to a molded body, they exert excellent effects as a weight reducing material, a heat insulation material, an acoustic insulation material, a damping material and so on. Accordingly, the hollow particles of the present disclosure are suitable as an additive for molded bodies. For example, the hollow particles are suitably used as an additive for molded bodies made of resin. Also, the hollow particles of the present disclosure are less likely to collapse and the void ratio is less likely to decrease even after they are subjected to a process in which external pressure is applied, such as kneading and injection molding. Accordingly, the hollow particles of the present disclosure are particularly suitably used as an additive for molded bodies that are obtained through a process in which external pressure is applied.

The molded body containing the hollow particles of the present disclosure may contain, as the resin, thermoplastic, thermosetting or room temperature curable resin such as polyethylene, polypropylene, polyvinyl chloride, polystyrene, polyurethane, epoxy resin, acrylonitrile-butadiene-styrene (ABS) resin, acrylonitrile-styrene (AS) resin, poly(meth)acrylate, polycarbonate, polyamide, polyimide, polyphenylene ether, polyphenylene sulfide, polyester, polytetrafluoroethylene, maleimide resin, bismaleimide triazine resin, liquid crystalline polyester resin, phenolic resin, vinyl ester resin, unsaturated polyester resin, cyanate ester resin, polyetherketoneketone resin, polyetherimide resin, polyphenylene oxide resin, melamine resin, urea resin, silicon resin, alkyd resin, benzoxazine resin, allyl resin, aniline resin and acrylic resin. Depending on the type of the resin, the resin may be appropriately mixed with a curing agent or catalyst such as an amine, an acid anhydride, an imidazole, a thiol, a phenol, a naphthol, a benzoxazine, a cyanate ester and a carbodiimide.

The molded body containing the hollow particles of the present disclosure may contain a thermoplastic elastomer as the resin. As the thermoplastic elastomer, a thermoplastic elastic polymer that is conventionally used as a molding resin, may be used, such as urethane-based elastomer, styrene-based elastomer, olefin-based elastomer, amide-based elastomer and ester-based elastomer. The thermoplastic elastomer is an elastomer having the following properties: it shows rubber elasticity at ordinary temperature (25°C) and it can be plasticized and molded at high temperature.

Also, the molded body containing the hollow particles of the present disclosure is not limited to a resin molded body. For example, it may be a rubber molded body or a molded body containing a mixture of a resin and a rubber. The molded body containing the hollow particles of the present disclosure may contain a rubber such as a natural rubber (NR), an isoprene rubber (IR), a butadiene rubber (BR), a styrene-butadiene copolymer rubber (SBR), an acrylonitrile-butadiene copolymer rubber (NBR) and an ethylene-propylene-diene terpolymer (EPDM). These rubbers may be used alone or in combination of two or more.

The molded body containing the hollow particles of the present disclosure may further contain organic or inorganic fibers such as carbon fibers, glass fibers, aramid fibers and polyethylene fibers. The hollow particles of the present disclosure can be contained as a filler in a molded body formed by use of a rubber or a resin (e.g., thermoplastic or thermosetting resin) and in a molded body formed by use of a fiber-containing material which contains a rubber or a resin (e.g., thermoplastic or thermosetting resin).

As the applications of the molded body made of resin or rubber, which contains the hollow particles of the present disclosure, examples include, but are not limited to, members such as a light reflective material, a heat insulation material, a sound insulation material and a low dielectric material, which are used in various kinds of fields such as the automotive field, the electronics field, the electric field, the architecture field, the aviation field and the space field; food containers; footwears such as sports shoes and sandals; components of household appliances; components of bicycles; stationery supplies; tools; and filaments of 3D printers.

Due to their excellent dielectric property, the hollow particles of the present disclosure are useful as, for example, an additive for insulating resin sheets that are used for the production of electronic parts such as a printed circuit board.

An insulating resin sheet containing the hollow particles of the present disclosure can be produced as follows, for example: a composition is prepared by mixing the hollow particles of the present disclosure and the above-described thermoplastic resin, thermosetting resin, thermoplastic elastomer, or a mixture thereof, and the composition is molded into a sheet by applying the composition to one or both surfaces of a sheet-shaped substrate and drying the applied composition, by extrusion molding of the composition, by transferring the composition, etc., thereby producing the insulating resin sheet. When the resin or elastomer contained in the insulating resin sheet is adhesive, the insulating resin sheet can be used as an adhesive sheet. More specifically, it can be used as a bonding sheet, for example. A bonding sheet is a material for forming insulating adhesive layers which are used to attach a conductor layer and an organic insulating layer in the production of a multi-layer printed circuit board.

The hollow particles of the present disclosure have a high void ratio, are less likely to collapse, and have high heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Also, the hollow particles of the present disclosure are suitable as a rust retardant. Since the hollow particles of the present disclosure are also useful as an additive for decreasing electric conductivity, for example, a coating material containing the hollow particles of the present disclosure can be used as a rust-resistant coating material (such as a coating primer and a lubricating coating material) for increasing the anticorrosivity and rust resistance of steel and so on. A rust-resistant additive may be included in the hollow particles added to rust-resistant coating materials.

Examples

Hereinbelow, the present disclosure is described more specifically using examples and comparative examples. However, the present disclosure is not limited to these examples. Also, "part(s)" and "%" are on a mass basis unless otherwise specified.

[Example 1]

(1) Mixture liquid preparation step

First, the following materials were mixed to produce an oil phase.

Ethylene glycol dimethacrylate: 25 parts
Trimethylolpropane trimethacrylate: 30 parts
Divinylbenzene: 26 parts
Ethylvinylbenzene: 19 parts
2,2'-Azobis(2,4-dimethylvaleronitrile) (oil-soluble polymerization initiator): 3 parts
Hydrophobic solvent: Hexane 100 parts

Meanwhile, in a stirring tank, at room temperature, an aqueous solution in which 12.1 parts of sodium hydroxide (an alkali metal hydroxide) was dissolved in 121 parts of deionized water, was gradually added under stirring to an aqueous solution in which 17.1 parts of magnesium chloride (a water-soluble polyvalent metal salt) was dissolved in 494 parts of deionized water, thereby preparing a magnesium hydroxide (sparingly water-soluble metal hydroxide) colloidal dispersion (magnesium hydroxide: 4 parts). The dispersion was used as an aqueous phase.

The obtained aqueous phase and oil phase were mixed, thereby preparing a mixture liquid.

(2) Suspension step

The mixture liquid obtained in the mixture liquid preparation step was suspended by stirring with a disperser (product name: HOMOMIXER, manufactured by: PRIMIX Corporation) at a rotational frequency of 4,000 rpm for one minute, thereby preparing a suspension in which droplets of a monomer composition including the hydrophobic solvent were dispersed in water.

(3) Polymerization step

A polymerization reaction was carried out by stirring the suspension obtained in the suspension step for one and half hours at a temperature of 65°C in a nitrogen atmosphere, thereby obtaining a precursor composition that contained precursor particles including the hydrophobic solvent.

(4) Washing step and solid-liquid separation step

The precursor composition was washed with dilute sulfuric acid (25°C, 10 minutes) to bring the pH of the composition to 5.5 or less. Next, water was separated therefrom by filtration. Then, 200 parts of deionized water was added to reslurry the resultant, and a water washing treatment (washing, filtration and dehydration) was repeatedly performed several times at room temperature (25°C). The resultant was separated by filtration, thereby obtaining a solid component. The obtained solid component was dried with a dryer at a temperature of 40°C, thereby obtaining the precursor particles including the hydrophobic solvent.

(5) Solvent removal step

The precursor particles obtained in the solid-liquid separation step were subjected to heating treatment for 12 hours with a vacuum dryer in a nitrogen atmosphere at 200°C, thereby removing the included hydrophobic solvent from the particles. Accordingly, the hollow particles of Example 1 were obtained. From the scanning electron microscopy observation result and void ratio of the obtained hollow particles, the particles were confirmed to be spherical and to have a hollow portion.

[Example 2]

The hollow particles of Example 2 were obtained in the same manner as Example 1, except that in "(1) Mixture liquid preparation step", the amount of the added hexane was changed as shown in Table 1.

[Examples 3 and 4]

The hollow particles of Examples 3 and 4 were obtained in the same manner as Example 1, except that in "(1) Mixture liquid preparation step", the type and amount of the added polymerizable monomer were changed as shown in Table 1.

[Example 5]

The hollow particles of Example 5 were obtained in the same manner as Example 1, except that in "(1) Mixture liquid preparation step", the amount of the magnesium hydroxide in the aqueous phase (a magnesium hydroxide colloidal dispersion) was changed to 10 parts by controlling the amount of the added magnesium chloride and that of the added sodium hydroxide.

[Example 6]

The hollow particles of Example 6 were obtained in the same manner as Example 1, except that in "(1) Mixture liquid preparation step", the amount of the deionized water in the aqueous phase was changed to a total of 780 parts.

[Examples 7 and 8]

The hollow particles of Examples 7 and 8 were obtained in the same manner as Example 1, except that in "(1) Mixture liquid preparation step", the type and amount of the added polymerizable monomer and the type and amount of the added hydrophobic solvent were changed as shown in Table 1.

[Comparative Example 1]

First, the following materials were mixed to produce an oil phase.

Methacrylic acid: 5 parts
Ethylene glycol dimethacrylate: 65 parts

Trimethylolpropane trimethacrylate: 30 parts
2,2'-Azobis(2,4-dimethylvaleronitrile) (oil-soluble polymerization initiator): 3 parts
Hydrophobic solvent: Cyclohexane 187 parts

Meanwhile, a mixture obtained by adding 3.0 parts of a surfactant to 615 parts of deionized water and mixing them, was used as an aqueous phase.

The aqueous phase and oil phase obtained above were mixed, thereby preparing a mixture liquid.

The mixture liquid was suspended by stirring with an in-line type emulsifying disperser (product name: MILDER, manufactured by: Pacific Machinery & Engineering Co., Ltd.) at a rotational frequency of 15,000 rpm, thereby preparing a suspension in which polymerizable monomer droplets including the hydrophobic solvent were dispersed in water.

A polymerization reaction was carried out by stirring the suspension for 4 hours at a temperature of 65°C in a nitrogen atmosphere, thereby obtaining a precursor composition that contained precursor particles including the hydrophobic solvent.

Nitrogen was bubbled into the precursor composition at 2 L/min for 4 hours in a temperature condition of 75°C for removal of the included hydrophobic solvent from the precursor particles, thereby obtaining a slurry of hollow particles containing water. Then, 200 parts of deionized water was added to reslurry the resultant, and a water washing treatment (washing, filtration and dehydration) was repeatedly performed several times at room temperature (25°C). The resultant was separated by filtration, thereby obtaining a solid component. The obtained solid component was dried at 60°C for 5 hours for removal of water contained in the particles, thereby obtaining the hollow particles of Comparative Example 1.

[Comparative Example 2]

The hollow particles of Comparative Example 2 were obtained in the same manner as Example 1, except for the following.

The following changes were made to "(1) Mixture liquid preparation step".

In "(3) Polymerization step", the polymerization reaction time was changed to 4 hours.

In "(5) Solvent removal step", the heating treatment time was changed to 6 hours.

In Comparative Example 2, the mixture liquid preparation step was carried out as follows.

First, the following materials were mixed to produce an oil phase.

Ethylene glycol dimethacrylate: 100 parts
Polar resin (a MMA/AA/EA copolymer): 2 parts
2,2'-Azobis(2,4-dimethylvaleronitrile) (oil-soluble polymerization initiator): 3 parts
Hydrophobic solvent: Cyclohexane 207 parts

Meanwhile, in a stirring tank, at room temperature, an aqueous solution in which 5.5 parts of sodium hydroxide (an alkali metal hydroxide) was dissolved in 55 parts of deionized water, was gradually added under stirring to an aqueous solution in which 7.8 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide: 4 parts). The dispersion was used as an aqueous phase.

The obtained aqueous phase and oil phase were mixed, thereby preparing a mixture liquid.

[Comparative Example 3]

The hollow particles of Comparative Example 3 were obtained in the same manner as Comparative Example 2, except that in "(1) Mixture liquid preparation step", the amount of the added cyclohexane was changed to 187 parts, and the amount of the deionized water in the aqueous phase was changed to a total of 615 parts.

The polar resin (a MMA/AA/EA copolymer) used in Comparative Examples 2 and 3 was synthesized by the following steps.

First, 200 parts of toluene was put in a reaction container. While stirring the toluene, the gas inside the reaction container was sufficiently replaced with nitrogen. Then, the temperature of the toluene was raised to 90°C. Then, a mixed solution of 96.2 parts of methyl methacrylate (MMA), 0.3 parts of acrylic acid (AA), 3.5 parts of ethyl acrylate (EA) and 2.8 parts of t-butylperoxy-2-ethylhexanoate (manufactured by: Nippon Oil & Fats Co., Ltd., product name: PERBUTYL O) was added dropwise to the reaction container for two hours. Also, the condition of the mixture was maintained for 10 hours under toluene flux, thereby completing polymerization. Then, the solvent was removed by distillation under reduced pressure to obtain a polar resin (an MMA/AA/EA copolymer, number average molecular weight 10000).

[Evaluation]

The hollow particles obtained in the examples and the comparative examples were measured and evaluated as follows. The results are shown in Table 1.

1. Volume average particle diameter of the hollow particles

The volume average particle diameter of the hollow particles was measured with a particle size distribution measuring device (product name: MULTISIZER 4e, manufactured by: Beckman Coulter, Inc.) The measurement condition is as follows.

 Aperture diameter: 50 um
 Dispersion medium: ISOTON II (product name)
 Concentration: 10%
 Number of the measured hollow particles: 100,000 particles

More specifically, 0.2 g of the sample hollow particles were put in a beaker. As a dispersant, a surfactant aqueous solution (product name: DRIWEL, manufactured by: Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

2. Density and void ratio of the hollow particles

2-1. Measurement of the apparent density of the hollow particles

First, approximately 30 $cm^3$ of the hollow particles were introduced into a measuring flask with a volume of 100 $cm^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ (g/$cm^3$) of the hollow particles was calculated by the formula (I) described above.

2-2. Measurement of the true density of the hollow particles

The hollow particles were pulverized in advance; approximately 10 g of the pulverized hollow particles were introduced into a measuring flask with a volume of 100 $cm^3$; and the mass of the introduced pulverized particles was precisely weighed.
Then, similarly to the measurement of the apparent density mentioned above, isopropanol was added to the measuring flask; the mass of the isopropanol was precisely weighed; and the true density $D_0$ (g/$cm^3$) of the hollow particles was calculated by the formula (II) described above.

2-3. Calculation of void ratio

The void ratio of the hollow particles was calculated by the above-described formula (III) from the apparent density $D_1$ and the true density $D_0$.

3. Thickness of the shell of the hollow particles

The thickness of the shell of the hollow particles was calculated as follows. The inner diameter r of the hollow particles was calculated by the above-described formula (1) using the volume average particle diameter R and void ratio of the hollow particles, and the thickness of the shell was calculated by the above-described formula (2) using the inner diameter r and the volume average particle diameter R.

4. Residual void ratio after the press test

The residual void ratio of the hollow particles was measured by the following press test method.

[Press test method]

On a hot plate heated to 200°C, 0.1 g of the hollow particles and 0.9 g of a polypropylene resin (product name: NOVATECPP, grade: MA1B, manufactured by: Japan Polypropylene Corporation) were melted and mixed to obtain a mixture. The obtained mixture was poured into a mold (manufactured by AS ONE Corporation, diameter 14 mm) for hot press machines, and was heated together with the mold for 15 minutes by a dryer at 200°C. Then, the mixture was stirred by a spatula. Next, the mold filled with the stirred mixture was placed at a hot press machine (model: H300-15, manufactured by: AS ONE Corporation) set to 80°C. A cylinder at 80°C was put in the mold and left to stand. At the time the temperature of the mold surface decreased to 140°C, the mold was pressed at a press pressure of 60 MPa (the cylinder pressure of the press machine was 4 MPa), thereby obtaining a disk-shaped molded body having a diameter of 14 mm and a thickness of 8 mm. The obtained disk-shaped molded body was removed from the mold and pressed into a 0.3-mm-thick sheet with a press machine at a pressure of 1 MPa or less at 200°C, thereby obtaining a sheet-shaped molded body.

The residual void ratio of the hollow particles contained in the obtained sheet-shaped molded body was calculated by the following formula (A) and determined as the residual void ratio after the press test.

$$\text{Residual void ratio } (\%) = \{(c-a)/(c-b)\} \times 100 \quad \text{Formula (A)}$$

In the formula (A), "a" is the specific gravity of the molded body; "b" is the specific gravity (a calculated value) of the molded body with the premise that the voids were maintained; and "c" is the specific gravity (a calculated value) of the molded body with the premise that all the hollow particles collapsed.

The specific gravity of the sheet-shaped molded body used for the calculation of the residual void ratio ("a" in the formula (A)) was measured by an underwater replacement method in accordance with JIS K 7112.

The specific gravity of the molded body with the premise that the voids were maintained ("b" in the formula (A)) was calculated by the following formula (B).

$$b = 1/\{(P_A/P_G)+(R_A/R_G)\} \quad \text{Formula (B)}$$

In the formula (B), $P_A$ is the amount of the added hollow particles; $P_G$ is the specific gravity (apparent density $D_1$) of the hollow particles; $R_A$ is the amount of the added polypropylene resin; and $R_G$ is the specific gravity of the polypropylene resin.

The specific gravity of the molded body with the premise that all the hollow particles collapsed ("c" in the formula (A)) was calculated by the following formula (C).

$$c = [R_G \times R_A + \{D_0 \times P_A \times (1-P_V/100)\}]/\{R_A+P_A \times (1-P_V/100)\} \quad \text{Formula (C)}$$

In the formula (C), $R_A$ is the amount of the added polypropylene resin; $R_G$ is the specific gravity of the polypropylene resin; $D_0$ is the true density $D_0$ of the hollow particles; $P_A$ is the amount of the added hollow particles; and $P_V$ is the void ratio (%) of the hollow particles.

5. Residual void ratio after injection molding

First, 10 parts of the hollow particles and 90 parts of polypropylene resin (manufactured by: Japan Polypropylene Corporation, product name: NOVATEC-PP, grade: MA1B (MFR at 230°C: 21 g/min) were mixed by a blender. Next, a resin composition thus obtained was kneaded by a biaxial kneader (product name: TEM-35B, manufactured by: Toshiba Machine Co., Ltd.) in the following kneading condition, extruded and then pelletized, thereby obtaining pellets of the resin composition.

<Kneading condition>

Screw diameter: 37 mm, L/D = 32
Screw rotational frequency: 250 rpm
Resin temperature: 190°C
Feed rate: 6 kg/h

The obtained pellets of the resin composition were dried by heating at 80°C for 6 hours. Then, using an injection molding machine, a molded body (size: 80 mm × 10 mm × 4 mm (thickness)) was obtained in the following molding condition.

<Molding condition>

Cylinder temperature: 200°C
Mold temperature: 70°C
Injection pressure: 70 MPa
Pressure keeping: 30 MPa

The residual void ratio of the hollow particles contained in the molded body obtained by the injection molding, was calculated by the formula (A) described above. The specific gravity of the molded body obtained by the injection molding ("a" in the formula (A)) was measured by an underwater replacement method in accordance with JIS K 7112. As the specific gravity of the molded body with the premise that the voids were maintained ("b" in the formula (A)) and the specific gravity of the molded body with the premise that all the hollow particles collapsed ("c" in the formula (A)), the same values as those used for the calculation of the residual void ratio after the press test, were used.

[Table 1]

Table 1

| | | | Example 1 | Example 2 | Example 3 | Example 4 |
|---|---|---|---|---|---|---|
| Polymerizable monomer | Crosslinkable monomer | Ethylene glycol dimethacrylate | 25 | 25 | 50 | |
| | | Trimethylolpropane trimethacrylate | 30 | 30 | | |
| | | Pentaerythritol tetraacrylate | | | 20 | 20 |
| | | Divinylbenzene | 26 | 26 | 17 | 46 |
| | Non-crosslinkable monomer | Methacrylic acid | | | | |
| | | Ethylvinylbenzene | 19 | 19 | 13 | 34 |
| Oil-soluble polymerization initiator | | | 3 | 3 | 3 | 3 |
| Hydrophobic solvent | | Cyclohexane | | | | |
| | | Hexane | 100 | 159 | 100 | 100 |
| Additive | | Polar resin | | | | |
| Dispersion stabilizer | | Magnesium hydroxide | 4 | 4 | 4 | 4 |
| | | Surfactant | | | | |
| Deionized water | | | 615 | 615 | 615 | 615 |

(continued)

| Properties of hollow particles | | Example 1 | Example 2 | Example 3 | Example 4 |
|---|---|---|---|---|---|
| | Volume average particle diameter ($\mu$m) | 11.8 | 10.1 | 12.2 | 10.3 |
| | Shell thickness ($\mu$m) | 0.79 | 0.57 | 0.82 | 0.69 |
| | Apparent density $D_1$ (g/cm$^3$) | 0.42 | 0.36 | 0.42 | 0.42 |
| | True density $D_0$ (g/cm$^3$) | 1.20 | 1.20 | 1.20 | 1.20 |
| | Void ratio (%) | 65 | 70 | 65 | 65 |
| | Residual void ratio (%) after press test | 100 | 90 | 100 | 100 |
| | Residual void ratio (%) after injection molding | 95 | 80 | 95 | 95 |

Table 1-continued (1)

| | | | Example 5 | Example 6 | Example 7 | Example 8 |
|---|---|---|---|---|---|---|
| Polymerizable monomer | Crosslinkable monomer | Ethylene glycol dimethacrylate | 25 | 25 | 70 | 80 |
| | | Trimethylolpropane trimethacrylate | 30 | 30 | 30 | |
| | | Pentaerythritol tetraacrylate | | | | 20 |
| | | Divinylbenzene | 26 | 26 | | |
| | Non-crosslinkable monomer | Methacrylic acid | | | | |
| | | Ethylvinylbenzene | 19 | 19 | | |
| Oil-soluble polymerization initiator | | | 3 | 3 | 3 | 3 |
| Hydrophobic solvent | | Cyclohexane | | | 120 | 120 |
| | | Hexane | 100 | 100 | | |
| Additive | | Polar resin | | | | |
| Dispersion stabilizer | | Magnesium hydroxide | 10 | 4 | 4 | 4 |
| | | Surfactant | | | | |
| Deionized water | | | 615 | 780 | 615 | 615 |
| Properties of hollow particles | | Volume average particle diameter ($\mu$m) | 6.2 | 15.1 | 10.5 | 97 |
| | | Shell thickness ($\mu$m) | 0.41 | 1.01 | 0.70 | 0.65 |
| | | Apparent density $D_1$ (g/cm$^3$) | 0.42 | 0.42 | 0.42 | 0.42 |
| | | True density $D_0$ (g/cm$^3$) | 1.20 | 1.20 | 1.20 | 1.20 |
| | | Void ratio (%) | 65 | 65 | 65 | 65 |
| | | Residual void ratio (%) after press test | 90 | 100 | 80 | 85 |
| | | Residual void ratio (%) after injection molding | 80 | 95 | 75 | 80 |

Table 1-continued (2)

| | | | Comparative Example 1 | Comparative Example 2 | Comparative Example 3 |
|---|---|---|---|---|---|
| Polymerizable monomer | Crosslinkable monomer | Ethylene glycol dimethacrylate | 65 | 100 | 100 |
| | | Trimethylolpropane trimethacrylate | 30 | | |
| | | Pentaerythritol tetraacrylate | | | |
| | | Divinylbenzene | | | |
| | Non-crosslinkable monomer | Methacrylic acid | 5 | | |
| | | Ethylvinylbenzene | | | |
| Oil-soluble polymerization initiator | | | 3 | 3 | 3 |
| Hydrophobic solvent | | Cyclohexane | 187 | 207 | 187 |
| | | Hexane | | | |
| Additive | | Polar resin | | 2 | 2 |
| Dispersion stabilizer | | Magnesium hydroxide | | 4 | 4 |
| | | Surfactant | 3 | | |
| Deionized water | | | 615 | 280 | 615 |
| Properties of hollow particles | | Volume average particle diameter ($\mu$m) | 2.8 | 5.5 | 10.3 |
| | | Shell thickness ($\mu$m) | 0.16 | 0.25 | 0.58 |
| | | Apparent density $D_1$ (g/cm$^3$) | 0.36 | 0.30 | 0.36 |
| | | True density $D_0$ (g/cm$^3$) | 1.20 | 1.20 | 1.20 |
| | | Void ratio (%) | 70 | 75 | 70 |
| | | Residual void ratio (%) after press test | 20 | 10 | 30 |
| | | Residual void ratio (%) after injection molding | 10 | 5 | 25 |

Table 1 shows the amounts (parts by mass) of the added materials and the measurement or evaluation results.

Each of the residual void ratios after the press test and after the injection molding shown in Table 1, is the average value of the sample number 10 (n=10). In the examples and the comparative examples, the variation coefficient of the residual void ratio after the press test was 0.006 or less. Accordingly, it was found that the above-described press test method was a highly accurate test method.

[Consideration]

The hollow particles obtained in Comparative Examples 1 to 3 had a low void retention ratio after the press test; they had poor pressure resistance; and they also had a low void retention ratio after the injection molding. In Comparative Examples 1 and 2, it is presumed that due to the composition of the polymerizable monomer used, a shell with excellent strength was not formed, and the thickness of the shell was thin; therefore, the pressure resistance of the hollow particles was poor. In Comparative Example 3, the same polymerizable monomer as Comparative Example 2 was used, and the shell thickness was set to the same level as the examples; however, the pressure resistance of the obtained hollow particles was poor compared to the hollow particles obtained in the examples. Accordingly, it is clear that controlling not only the shell thickness but also the composition of the polymerizable monomer used for the shell formation, etc., are necessary to sufficiently improve the pressure resistance of the hollow particles.

Meanwhile, the hollow particles obtained in Examples 1 to 8 were spherical particles having a hollow portion;

they had a high void retention ratio of 80% or more after the press test, while having a high void ratio of 50% or more, and they had excellent pressure resistance; and they also had a high void retention ratio after the injection molding. It is presumed that in Examples 1 to 8, the hollow particles excellent in pressure resistance were obtained by controlling the composition of the polymerizable monomer used for the shell formation, the type of the hydrophobic solvent included in the particles during the production process, the particle diameter of the hollow particles, etc. Especially, the hollow particles obtained in Examples 1 to 6 were such that the residual void ratios after the press test and after the injection molding were high, and the pressure resistance was particularly excellent. In Examples 1 to 6, it is presumed that by using the combination of the acrylic monomer and the hydrocarbon monomer as the polymerizable monomer and by using the chain hydrocarbon solvent as the hydrophobic solvent, the shell uniformity was improved, resulting in an increase in pressure resistance.

From the hollow particles obtained in each of Examples 1 to 8, 3000 particles were randomly selected and examined. As a result, in all of Examples 1 to 8, the percentage of the particles having a circularity of 0.85 or less was 10% by mass or less, and the percentage of the particles having only one or two hollow portions was 90% by mass or more.

Reference Signs List

> 1. Aqueous medium
> 2. Low polarity material
> 4a. Hydrophobic solvent
> 4b. Material not containing hydrophobic solvent
> 6. Shell
> 7. Hollow portion
> 8. Droplet
> 9. Precursor particle
> 10. Hollow particle having a gas-filled hollow portion

## Claims

1. Hollow particles which comprise a shell containing a resin and a hollow portion surrounded by the shell,

   > wherein a void ratio is 50% or more, and
   > wherein a residual void ratio measured by the following press test method is 80% or more:
   > [press test method]
   > a mixture obtained by melting and mixing 0.1 g of the hollow particles and 0.9 g of a polypropylene resin at 200°C, is poured into a mold for a hot press machine, heated at 200°C for 15 minutes, and then stirred; the mold filled with the mixture is installed in the hot press machine set to 80°C; a cylinder at 80°C is put in the mold and left to stand; the mixture is pressed at 60 MPa when a surface temperature of the mold reaches 140°C, thereby obtaining a molded body of the mixture; the molded body is removed from the mold and pressed at a pressure of 1 MPa or less, thereby forming the molded body into a sheet shape; and the residual void ratio of the hollow particles contained in the obtained sheet-shaped molded body is measured.

2. The hollow particles according to Claim 1, wherein the shell contains, as the resin, a polymer containing 50 parts by mass or more of crosslinkable monomer units in 100 parts by mass of all monomer units.

3. The hollow particles according to Claim 2, wherein the polymer contains, as the crosslinkable monomer units, trifunctional or higher-functional crosslinkable monomer units derived from a trifunctional or higher-functional crosslinkable monomer, and in 100 parts by mass of all monomer units of the polymer, a content of the trifunctional or higher-functional crosslinkable monomer units is 10 parts by mass or more and 50 parts by mass or less.

4. The hollow particles according to Claim 2 or 3, wherein the polymer contains, as the crosslinkable monomer units, difunctional crosslinkable monomer units derived from a difunctional crosslinkable monomer and trifunctional or higher-functional crosslinkable monomer units derived from a trifunctional or higher-functional crosslinkable monomer.

5. The hollow particles according to Claim 4, wherein, in a total 100 parts by mass of the difunctional crosslinkable monomer units and the trifunctional or higher-functional crosslinkable monomer units, a content of the trifunctional or higher-functional crosslinkable monomer units is 5 parts by mass or more and 40 parts by mass or less.

6. The hollow particles according to any one of Claims 1 to 5, wherein the shell contains, as the resin, a polymer containing acrylic monomer units and hydrocarbon monomer units, and in a total 100 parts by mass of the acrylic monomer units and the hydrocarbon monomer units, a content of the hydrocarbon monomer units is 10 parts by mass or more and 80 parts by mass or less.

7. The hollow particles according to any one of Claims 1 to 6, wherein a volume average particle diameter is 5.0 um or more and 40.0 um or less.

[FIG. 1]

## INTERNATIONAL SEARCH REPORT

| International application No. |
| --- |
| **PCT/JP2022/047033** |

**A. CLASSIFICATION OF SUBJECT MATTER**

*C08F 2/44*(2006.01)i; *B01J 13/14*(2006.01)i; *C08F 2/18*(2006.01)i
FI: C08F2/44 B; C08F2/18; B01J13/14

According to International Patent Classification (IPC) or to both national classification and IPC

**B. FIELDS SEARCHED**

Minimum documentation searched (classification system followed by classification symbols)

C08F2/44; B01J13/14; C08F2/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/112117 A1 (ZEON CORP.) 10 June 2021 (2021-06-10)<br>claims, paragraphs [0008]-[0012], [0032], examples | 1-7 |
| A | WO 2021/172402 A1 (ZEON CORP.) 02 September 2021 (2021-09-02)<br>entire text | 1-7 |
| A | WO 2020/261926 A1 (ZEON CORP.) 30 December 2020 (2020-12-30)<br>entire text | 1-7 |

☐ Further documents are listed in the continuation of Box C.   ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 March 2023** | **20 March 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/047033**

| Patent document cited in search report | | | Publication date (day/month/year) | Patent family member(s) | | | Publication date (day/month/year) |
|---|---|---|---|---|---|---|---|
| WO | 2021/112117 | A1 | 10 June 2021 | US | 2022/0355264 | A1 | |
| | | | | claims, paragraphs [0010]-[0014], [0088]-[0090], examples | | | |
| | | | | CN | 114761440 | A | |
| WO | 2021/172402 | A1 | 02 September 2021 | CN | 115135678 | A | |
| | | | | entire text | | | |
| WO | 2020/261926 | A1 | 30 December 2020 | US | 2022/0251247 | A1 | |
| | | | | entire text | | | |
| | | | | EP | 3992213 | A1 | |
| | | | | CN | 113993918 | A | |
| | | | | KR | 10-2022-0031557 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020261926 A

- WO 2021112110 A

**Non-patent literature cited in the description**

- Kagaku Binran, Kiso Hen, Kaitei 4 Ban. Maruzen Publishing Co., Ltd, 30 September 1993, II-498-II-503